(19) Europäisches Patentamt
European Patent Office
Office européen des brevets

(11) Publication number: **0 482 855 A2**

# (12) EUROPEAN PATENT APPLICATION

(21) Application number: **91309688.9**

(51) Int. Cl.$^5$: **C08F 297/06**

(22) Date of filing: **21.10.91**

(30) Priority: **23.10.90 JP 284702/90**

(43) Date of publication of application: **29.04.92 Bulletin 92/18**

(84) Designated Contracting States: **DE FR GB IT NL**

(71) Applicant: **MITSUBISHI PETROCHEMICAL COMPANY LIMITED**
**5-2, Marunouchi 2-Chome**
**Chiyoda-Ku Tokyo-To (JP)**

(72) Inventor: **Fujita, Takashi, c/o Mitsubishi Petrochemical**
**Co. Ltd. of Yokkaichi, Sogo Kenkyusho, 1, Toho-cho**
**Yokkaichi-shi, Mie-ken (JP)**
Inventor: **Ishii, Kohichiroh, c/o Mitsubishi Petrochemical**
**Co. Ltd. of Yokkaichi, Sogo Kenkyusho, 1, Toho-cho**
**Yokkaichi-shi, Mie-ken (JP)**

(74) Representative: **Smith, Sydney**
**Elkington and Fife Prospect House 8**
**Pembroke Road**
**Sevenoaks, Kent TN13 1XR (GB)**

## (54) Process for preparing propylene block copolymers.

(57) In a two-step polymerization of propylene under the catalysis by a Ziegler catalyst comprising (A) a titanium-containing solid catalyst component such as that based on $TiCl_3$ or $TiCl_4$ preferably supported on a magnesium compound and (B) an organoaluminum component wherein a crystalline propylene polymer is prepared in the first step and a rubbery propylene copolymer is prepared in the second step thereby to produce a propylene block copolymer or a chemically blended propylene polymer, the improvement which comprises the use as the titanium-containing solid catalyst of that which has undergone a preliminary polymerization of a diolefin compound of 4 to 18 carbon atoms polymerized thereon. Tackiness of propylene block copolymers or chemically blended propylene polymers which is likely to accompany such polymers is reduced.

EP 0 482 855 A2

## BACKGROUND OF THE INVENTION

### Field of the Art

This invention relates to a process for preparing propylene block copolymers having high rigidity and high impact resistance, and improved in tackiness when the copolymers are particulate. The propylene block copolymers, which are produced by a two-step polymerization step, can alternatively be called chemically blended propylene polymers.

### Related Art

Crystalline polypropylene have the advantageous properties of high rigidity and high resistance for heat, but have the shortcoming of low impact resistance which is particularly remarkable at low temperatures.

There has already been known a method for improving the above point, in which propylene and ethylene or another olefin are polymerized in stages to give a block copolymer, as disclosed in Japanese Patent Publications No. 43-11230, No. 44-16668, No. 44-20621, No. 49-24593 and No. 49-30264, Japanese Laid-Open Patent Applications No. 48-25781, No. 50-115296, No. 53-35789 and No. 54-110072, and the like.

However, in the case where propylene and ethylene are polymerized in two stages or multiple stages, although the resulting polymer will have improved impact resistance, a large amount of low crystalline polymers are produced as by-products since the polymerization product contains copolymeric part.

In general, to improve the impact resistance of such block copolymers, the production of a rubber-like copolymers of propylene with representatively ethylene which are elastomeric or rubbery is increased. In this case, however, the amount of the sticky by-product is increased, and accordingly the polymer particles adhere to one another, and the polymer adheres to an inner wall of an apparatus which is used for the production of the polymer. As a result, it often becomes difficult to stably and continuously operate the apparatus over a long period of time.

In the polymerization in which no dispersant is used such as vapor-phase polymerization, in particular, impairment in fluidity of particulate polymers produced due to tackiness of the polymer particles impose a significant problem to solve in view of operation.

Technology has thus been desired by which operational stability is increased through prevention of polymer particles from sticking even when the amount of the elastomeric or rubber-like copolymer is increased.

## SUMMARY OF THE INVENTION

The inventors of the present invention have made studies to solve the above-described problems in two-step polymerization technology, and have found that the problems can be solved by using a specific titanium-containing solid catalyst component thereby to obtain, at the first step, polymer particles of a specified porosity. The present invention is based on the finding.

Accordingly, the present invention presents the improvement in a process for producing propylene block copolymers comprising steps, under catalysis by a Ziegler catalyst comprising a titanium-containing solid catalyst component and an organoaluminum component, of a first polymerization step wherein propylene alone or an admixture of propylene with ethylene is polymerized in a single or multiple step to prepare a crystalline propylene polymer and a second step wherein an admixture of propylene with ethylene is polymerized in a single or multiple step to prepare a rubbery polymer, which improvement comprises the use in the first step of a titanium-containing solid catalyst component which has undergone preliminary polymerization so that 1 to 100 g, per 1 g of the titanium-containing solid catalyst component, of a diene compound having 4 to approximately 18 carbon atoms is polymerized thereon thereby preparing, in the first step, a crystalline propylene polymer which has a pore volume of at least 0.05 c.c of pores of a diameter of 100 to 2,000 Ångstrom determined by a porosimeter.

By the process for preparing propylene block copolymers according to the present invention, a propylene block copolymer having high rigidity and high impact resistance can be obtained stably without suffering from adhesion of polymer particles.

Furthermore, according to the present invention, even when the amount of a rubbery copolymer is large, for instance, 60% by wt. or more, particles of the polymer obtained are less sticky, and the conventional trouble which has been caused upon operating an apparatus used for the polymerization can thus be solved. The reason why such advantages are obtained has not been elucidated, but the inventors presume that the specified pore volume is the possible point since the pore volume of particles of polypropylene powder obtained in the first step appears to correlate with the tackiness of the final polymer produced.

## DETAILED DESCRIPTION OF THE INVENTION

### [Catalyst]

The catalyst of the present invention is a Ziegler catalyst comprising a titanium-containing solid component and an organoaluminum component. The term

"comprise" herein means that the components of the catalyst are not limited only to the above-enumerated ones, that is, the Ti-containing solid component and the organoaluminum component, and does not exclude the co-existence of other components fitting for the purposes of the invention so long as they do not impair the improvement inherent in the present invention.

<Ti-containing solid catalyst component (A)>

The Ti-containing solid catalyst component, component (A), used in the present invention is one which has undergone the preliminary polymerization wherein a diene compound of 4 or more carbon atoms is polymerized thereon.

Titanium component

The titanium component in the titanium-containing solid catalyst component may be any one provided that it can produce polymers of a polymeric structure defined in the present invention. Examples of such titanium component include $TiCl_3$ compounds such as those obtained by reduction of $TiCl_4$ by $H_2$, by a metallic aluminum or by an organoaluminum compound. The $TiCl_3$ compounds may or may not have undergone mechanical pulverization. $TiCl_3$ compounds prepared by reduction of $TiCl_4$ by an organoaluminum compound, followed by treatment with an electron donor compound and, optionally, further with $TiCl_4$ are examples of usable $TiCl_3$ compounds.

The titanium component can be in the supported form on a magnesium compound as what is called "highly activated catalyst".

The representable titanium component in the supported form can be defined as "a solid catalyst component for a Ziegler catalyst comprising titanium, magnesium and a halogen".

Examples of these titanium component in the supported form include those disclosed in Japanese Laid-Open Patent Applications
No. 53-45688, No. 54-3894, No. 54-31092, No. 54-39483,
No. 54-94591, No. 54-118484, No. 54-131589, No. 55-75411,
No. 55-90510, No. 55-90511, No. 55-127405, No. 55-147507,
No. 55-155003, No. 56-18609, No. 56-70005, No. 56-72001,
No. 56-86905, No. 56-90807, No. 56-155206, No. 57-3803,
No. 57-34103, No. 57-92007, No. 57-121003, No. 58-5309
No. 58-5310, No. 58-5311, No. 58-8706, No. 58-27732,
No. 58-32604, No. 58-32605, No. 58-67703, No. 58-117206,
No. 58-127708, No. 58-183708, No. 58-183709,
No. 59-149905, No. 59-149906, No. 60-130607,
No. 61-55104, No. 61-204204, No. 62-508,
No. 62-15209, No. 62-20507, No. 62-184005,
No. 62-236805, No. 63-113004, No. 63-199207,
No. 1-139601 and No. 1-215806, and the like.

As magnesium compounds which serve as the source of magnesium for use in the present invention, magnesium halides, dialkoxymagnesiums, alkoxymagnesium halides, magnesium oxyhalides, dialkylmagnesiums, magnesium oxide, magnesium hydroxide, carboxylic acid salts of magnesium, and the like can be mentioned. Of these magnesium compounds, magnesium halides are preferred.

As titanium compounds which serve as the source of titanium, those compounds represented by the formula $Ti(OR^1)_{4-n}X_n$, in which $R^1$ is a hydrocarbyl group, preferably a hydrocarbyl group having approximately 1 to 10 carbon atoms, X represents a halogen, and n represents a number in the range of $0 \leqq n \leqq 4$, can be mentioned. As specific examples of the compounds,
$TiCl_4$,
$TiBr_4$,
$Ti(OC_2H_5)Cl_3$,
$Ti(OC_2H_5)_2Cl_2$,
$Ti(OC_2H_5)_3Cl$,
$Ti(O\text{-}iC_3H_7)Cl_3$,
$Ti(O\text{-}nC_4H_9)Cl_9$,
$Ti(O\text{-}nC_4H_9)_2Cl_2$,
$Ti(OC_2H_5)Br_3$,
$Ti(OC_2H_5)(OC_4H_9)_2Cl$,
$Ti(O\text{-}nC_4H_9)_3Cl$,
$Ti(O\text{-}C_6H_5)Cl_3$,
$Ti(O\text{-}iC_4H_9)_2Cl_2$,
$Ti(OC_5H_{11})Cl_3$,
$Ti(OC\text{-}_6H_{13})Cl_3$,
$Ti(OC_2H_5)_4$,
$Ti(O\text{-}nC_3H_7)_4$,
$Ti(O\text{-}nC_4H_9)_4$,
$Ti(O\text{-}iC_4H_9)_4$,
$Ti(O\text{-}nC_6H_{13})_4$,
$Ti\ (O\text{-}nC_8H_{17})_4$,
$Ti\ [OCH_2CH(C_2H_5)C_4H_9]_4$,
and the like can be mentioned.

Furthermore, a molecular compound prepared by reacting $TiX'_4$, in which X' represents a halogen, with an electron donor which will be described later can also be employed. As specific examples of the molecular compound,
$TiCl_4 \cdot CH_3COC_2H_5$,
$TiCl_4 \cdot CH_3CO_2C_2H_5$,
$TiCl_4 \cdot C_6H_5NO_2$,
$TiCl_4 \cdot CH_3COCl$,
$TiCl_4 \cdot C_6H_5COCl$,
$TiCl_4 \cdot C_6H_5CO_2C_2H_5$,
$TiCl_4 \cdot ClCOC_2H_5$,

$TiCl_4 \cdot C_4H_4O$, and the like can be mentioned.

Of these titanium compounds, preferable ones are $TiCl_4$, $Ti(OC_2H_5)_4$, $Ti(OC_4H_9)_4$, $Ti(OC_4H_9)Cl_3$, and the like.

The titanium compounds of a formula:

$$Ti(OR^2)_{3-n}X_n$$

wherein $R^2$ is a hydrocarbyl group of preferably 1 to 10 carbon atoms, X is a halogen atom, and n is a number in the range of $0 < n \leqq 3$ constitute another group of usable titanium compounds. Examples of such compounds include:

$TiCl_3$,
$TiBr_3$,
$Ti(OCH_3)Cl_2$, and
$Ti(OC_2H_5)Cl_2$.

Still further group of usable titanium compounds consists of titanocene compounds, examples of which include dicyclopentadienyl dichlorotitanium, dicyclopentadienyl dimethyltitanium, and bisindenyl dichlorotitanium.

Halogen is generally supplied by the above-described halogenated compounds of magnesium and/or titanium. However, it can also be supplied by known halogenating agents such as a halogenated compound of aluminum, a halogenated compound of silicon and a halogenated compound of phosphorus.

The halogen contained in the catalytic component may be fluorine, chlorine, bromine, iodine, or a mixture thereof, and chlorine is particularly preferable.

It is acceptable that the solid component for use in the present invention comprises, other than the above-described essential components, other components such as silicon compounds such as $SiCl_4$ and $CH_3SiCl_3$, polymeric silicon compounds such as methylhydrogenpolysiloxane, aluminum compounds such as $Al(O\text{-}iC_3H_7)_3$, $AlCl_3$, $AlBr_3$, $Al(OC_2H_5)_3$, and $Al(OCH_3)_2Cl$, boron compounds such as $B(OCH_3)_3$, $B(OC_2H_5)_3$, and $B(OC_6H_5)_3$, and the like. Also, these compounds can remain in the solid components as the components of silicon, aluminum, boron, and the like.

Further, when preparing this solid component, an electron donor can also be used as what is called "an internal donor".

As the electron donor (internal donor) usable for the preparation of the solid component, electron donors containing oxygen such as alcohols, phenols, ketones, aldehydes, carboxylic acids, esters of organic or inorganic acids, ethers, acid amides and acid anhydrides, and electron donors containing nitrogen such as ammonia, amines, nitriles and isocyanates can be mentioned.

More specifically, (a) alcohols having 1 to 18 carbon atoms such as methanol, ethanol, propanol, pentanol, hexanol, octanol, dodecanol, octadecyl alcohol, benzyl alcohol, phenylethyl alcohol, cumenyl alcohol and isopropylbenzyl alcohol, (b) phenols having 6 to 25 carbon atoms, which may have an alkyl group, such as phenol, cresol, xylenol, ethylphenol, propylphenol, isopropylphenol, nonylphenol and naphthol, (c) ketones having 3 to 15 carbon atoms such as acetone, methyl ethyl ketone, methyl isobutyl ketone, acetophenone and benzophenone, (d) aldehydes having 2 to 15 carbon atoms such as acetaldehyde, propionaldehyde, octylaldehyde, benzaldehyde, tolualdehyde and naphthaldehyde, (e) esters of an organic acid having 2 to 20 carbon atoms such as methyl formate, methyl acetate, ethyl acetate, vinyl acetate, ethylcellosolve acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexane carboxylate, methyl benzoate, ethyl benzoate, ethylcellosolve benzoate, propyl benzoate, butyl benzoate, octyl benzoate, cyclohexyl benzoate, phenyl benzoate, benzyl benzoate, methyl toluate, ethyl toluate, amyl toluate, ethylethylbenzoate, methyl anisate, ethyl anisate, ethylethoxybenzoate, diethyl phthalate, dibutyl phthalate, diheptyl phthalate, $\gamma$-butyrolactone, $\alpha$-valerolactone, coumarine, phthalide and ethylene carbonate, (f) esters of an inorganic acid such as esters of silicic acid, for instance, ethyl silicate, butyl silicate, phenyltriethoxysilane, diphenyldimethoxysilane and tert-butylmethyldimethoxysilane, (g) acid halides having 2 to 15 carbon atoms such as acetyl chloride, benzoyl chloride, toluic acid chloride, anisic acid chloride, phthaloyl chloride and isophthaloyl chloride, (h) ethers having 2 to 20 carbon atoms such as methyl ether, ethyl ether, isopropyl ether, butyl ether, amyl ether, tetrahydrofuran, anisole and diphenyl ether, (i) acid amides such as acetic acid amide, benzoic acid amide and toluic acid amide, (j) amines such as methylamine, ethylamine, diethylamine, tributylamine, piperidine, tribenzylamine, aniline, pyridine, picoline and tetramethylethylenediamine, (k) nitriles such as acetonitrile, benzonitrile and trinitrile, and the like can be mentioned. Two or more types of these electron donors can be employed in combination. Of these, preferred electron donors are esters of an organic acid, acid halides, and esters of an inorganic acid, and particularly preferred ones are ethylcellosolve acetate, dialkyl phthalates, phthalic acid halide, and organoalkoxysilicon.

The above respective components can be employed in any amount as long as the effects of the present invention can be obtained. However, in general, it is preferably in the following respective ranges.

The amount of the titanium compound is such that the molar ratio of the titanium compound to the magnesium compound employed is in the range of from 1 x $10^{-4}$ to 1000, preferably from 0.01 to 10. In the case where a compound as the source of halogen is used, the amount of the compound is such that the molar ratio of the compound to the magnesium employed is

in the range of from 1 x $10^{-2}$ to 1000, preferably from 0.1 to 100, irrespective as to whether the titanium compound and/or the magnesium compound contains halogen or not.

The amount of the silicon, aluminum, or boron compound is such that the molar ratio of the compound to the above magnesium compound employed is in the range of from 1 x $10^{-3}$ to 100, preferably from 0.01 to 1.

The amount of the electron donor compound is such that the molar ratio of the compound to the above magnesium compound employed is in the range of from 1 x $10^{-3}$ to 10, preferably from 0.01 to 5.

The component (A) may be prepared by using the above-described titanium source, magnesium source, halogen source, and, if necessary, other components such as the electron donor by, for instance, one of the following preparation methods:

(a) A method in which halogenated magnesium and, if necessary, an electron donor are brought into contact with a titanium-containing compound.

(b) A method in which halogenated magnesium, an electron donor and a titanium-halogen-containing compound are brought into contact with alumina or magnesia which has been treated with a halogenated phosphorus compound.

(c) A method in which a halogenated titanium compound and/or a halogenated compound of silicon and, if necessary, an electron donor are brought into contact with a solid component which is obtained by contacting halogenated magnesium with titanium tetraalkoxide and a specific polymeric silicon compound.

As the polymeric silicon compound, compounds represented by the following formula are suitable:

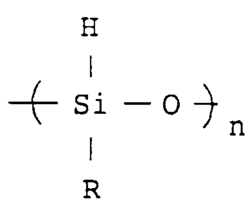

wherein R is a hydrocarbyl group having 1 to 10 carbon atoms, and n represents such a polymerization degree that the polymeric silicon compound has a viscosity of approximately 1 to 100 centistokes.

Of these, methylhydrogenpolysiloxane, phenyl-hydrogenpolysiloxane, cyclohexylhydrogenpo-lysiloxane, 1,3,5,7-tetramethylcyclotetrasiloxane, 1, 3, 5,7,9-pentamethylcyclopentacycloxane, and ethylhydrogenpolysiloxane, and the like are preferred.

(d) A method in which a titanium compound is brought into contact with a solid component which is separated, by using a halogenating agent or titanium halogen compound, from a solution prepared by dissolving a magnesium compound in titanium tetraalkoxide and an electron donor.

(e) A method in which an organomagnesium compound such as a Grignard reagent is reacted with a halogenating agent, a reducing agent or the like, and then, if necessary, an electron donor and a titanium compound are brought into contact therewith.

(f) A method in which a halogenating agent and/or titanium compound is brought into contact with an alkoxymagnesium compound in the presence or absence of an electron donor.

Of these, the methods (c), (d) and (e) are preferred, and the method (c) is particularly preferred.

Thus, the solid component (A) comprising as essential components titanium, magnesium and a halogen can be obtained.

The titanium-containing solid catalyst component in accordance with the present invention can further comprise a silicon compound of a specified structure and/or an organoaluminum compound of Group I to III metal of the Periodic Table.

The silicon compound of a specified structure is indicated by a formula

$$R^3R^4_{3-n}Si(OR^5)_n$$

wherein $R^3$ stands for a branched hydrocarbyl group, $R^4$ stands for a hydrocarbyl group, which may be the same as or different from $R^3$, $R^5$ stands for a hydrocarbyl group, and n is a number of from 1 to 3.

It is preferred that $R^3$ have a branch from the carbon atom adjacent to the silicon atom, and in this case, it is preferred that the branch be an alkyl group, a cycloalkyl group, or an aryl group such as, for example, a phenyl group or a methyl-substituted phenyl group. Furthermore, it is preferred that in $R^3$, the carbon atom adjacent to the silicon atom, that is, the carbon atom at the $\alpha$-position, be a secondary or tertiary carbon atom. It is especially preferred that the carbon atom bonded to the silicon atom is a tertiary carbon atom. The $R^3$ is ordinarily of 3 to 20 carbon atoms, preferably 4 to 10 carbon atoms. Generally, $R^4$ is a branched or linear hydrocarbyl group having 1 to 20 carbon atoms, preferably 1 to 10 carbon atoms. $R^5$ is a branched or linear hydrocarbyl group having 1 to 20 carbon atoms, preferably 1 to 10 carbon atoms.

Examples of the silicon compounds include:
$(CH_3)_3CSi(CH_3)(OCH_3)_2$,
$(CH_3)_3CSi(CH(CH_3)_2)(OCH_3)_2$,
$(CH_3)_3CSi(CH_3)(OC_2H_5)_2$,
$(C_2H_5)_3CSi(CH_3)(OCH_3)_2$,
$(CH_3)(C_2H_5)CHSi(CH_3)(OCH_3)_2$,
$((CH_3)_2CHCH_2)_2Si(OCH_3)_2$,
$(C_2H_5)(CH_3)_2CSi(CH_3)(OCH_3)_2$,
$(C_2H_5)(CH_3)_2CSi(CH_3)(OC_2H_5)_2$,
$(CH_3)_3CSi(OCH_3)_3$,
$(iC_3H_7)_2Si(OCH_3)_2$,
$(iC_3H_7)_2Si(OC_2H_5)_2$,
$(iC_3H_7)(CH_3)Si(OCH_3)_2$,

$(CH_3)_3CSi(OC_2H_5)_3$,
$(C_2H_5)_3CSi(OC_2H_5)_3$,
$(CH_3)(C_2H_5)CHSi(OCH_3)_3$,
$(C_2H_5)(CH_3)_2CSi(OCH_3)_3$,
$(C_2H_5)(CH_3)_2CSi(OC_2H_5)_3$,

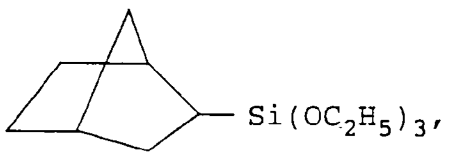,

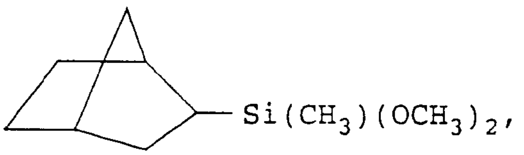,

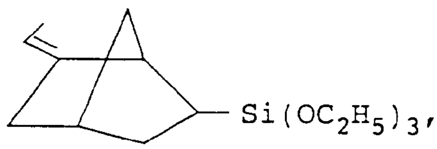,

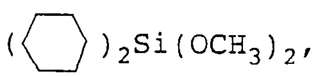,

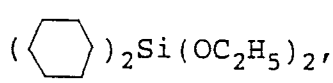,

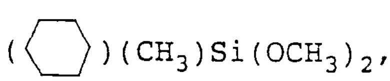,

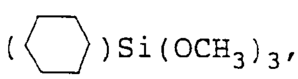,

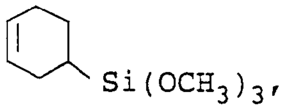, and

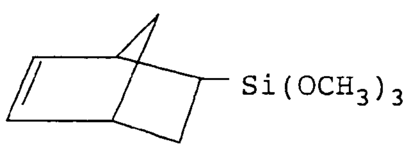.

Among these, preferable are the silicon compounds of the formula wherein $R^3$ is a branched hydrocarbyl group of 3 to 20 carbon atoms and has an α-carbon atom which is secondary or tertiary or is a cyclic aliphatic hydrocarbyl group of 5 to 12 carbon atoms, and more preferable are those whose $R^3$ is a branched hydrocarbyl group of 4 to 10 carbon atoms and has an α-carbon atom which is tertiary.

The quantity of the silicon compounds can be at any level so far as the advantages inherent in the present invention are obtainable, but is, in general, such that the atomic ratio of Si/Ti is in the range of 0.01 to 1,000, preferably 0.1 to 100.

The organometal compounds of the metals of the Groups I to III of the Periodic Table, which may be used as an optional component in the course of preparing the Ti-containing solid catalyst component, have at least one organic radical-metal bond. The organic radical is representatively a hydrocarbyl group of 1 to 10, preferably 1 to 6, carbon atoms.

The remaining valence or valences of the metal which are not satisfied by the organic radical, if any, may be satisfied by a hydrogen atom, a halogen atom, a hydrocarbyloxy group wherein the hydrocarbyl group has 1 to 10, preferably 1 to 6 carbon atoms, or the metal used with an oxygen atom intervening such as

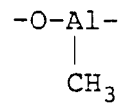

when it is a methylalumoxane.

Examples of such organometal compounds include:

(a) organolithium compounds such as methyllithium, n-butyllithium, and t-butyllithium;

(b) organomagnesium compounds such as butylethylmagnesium, dibutylmagnesium, hexylethylmagnesium, butylmagnesium chloride and t-butylmagnesium bromide;

(c) organozinc compounds such as diethylzinc, and dibutylzinc; and

(d) organoaluminum compounds such as trimethylaluminum, triethylaluminum, triisobutylaluminum, tri-n-hexylaluminum, diethylaluminum chloride, diethylaluminum hydride, diethylaluminum ethoxide, ethylaluminum sesquichloride, ethylaluminum dichloride, and methylaluminoxanes.

Preferable organometal compounds among those given above are organoaluminum compounds.

The amount of organometal compounds when used can be at any level so far as the advantages inherent in the present invention are obtainable, but is, in general, such that the atomic ratio of the organometal compound/Ti is in the range of 0.01 to 100, preferably 0.1 to 30.

## Diene compound

The titanium-containing solid catalyst component used in the present invention is the titanium component as is shown above which has undergone the preliminary polymerization thereover of a diene compound of at least 4 and preferably up to 18 carbon atoms.

Examples of the diene compounds include alkadienes such as 1,3-butadiene, 1,2-butadiene, isoprene, 1,4-hexadiene, 1,5-hexadiene, 1,3-pentadiene, 1,4-pentadiene, 2,3-pentadiene, 2,6-octadiene, cis-2, trans-4-hexadiene, trans-2, trans-4-hexadiene,

1,2-heptadiene, 1,4-heptadiene, 1,5-heptadiene, 1,6-heptadiene, 2,4-heptadiene, dicyclopentadiene, 1,3-cyclohexadiene, 1,4-cyclohexadiene, cyclopentadiene, 1,3-cycloheptadiene, 4-methyl-1,4-hexadiene, 5-methyl-1,4-hexadiene, 1,9-decadiene, 1,13-tetradecadiene; and aralkadienes such as divinylbenzenes, i.e. para-divinylbenzene, metadivinylbenzene, and ortho-divinylbenzene.

Preferable diene compounds among those given above are (i) divinylbenzenes and (ii) alkadienes having 4 to 8 carbon atoms, preferably of a non-conjugated diene structure, more preferably 1,5-hexadiene.

Preliminary polymerization

The preliminary polymerization comprises contacting the diene compound with the titanium component thereby to polymerize the diene compound on the titanium component whereby the titanium-containing solid catalyst component in accordance with the present invention is obtained.

The reaction of the titanium component with the diene compound can be conducted under any reaction conditions so far as the advantages inherent in the present invention are obtainable.

The following reaction conditions may, in general, be preferable.

The temperature at which the diene compound is contacted with the titanium component is from -50°C to 150°C, preferably 0°C to 100°C. The contact may be conducted for a time sufficient enough for polymerizing the diene compound so that the content of the polymer is 1 to 100 g, preferably 2 to 10 g, per 1 g of the titanium-containing solid catalyst component.

The preliminary polymerization may, in general, be conducted preferably under stirring, and preferably in the presence of an inert solvent or dispersant such as n-hexane or n-heptane.

<Organoaluminum compound (B)>

Component (B) is an organoaluminum compound for making up a Ziegler catalyst in the present invention.

As specific examples of the compound, compounds represented by the formulae $R^6_{3-n}AlX_n$ and $R^7_{3-m}Al(OR^8)_m$ are mentioned, wherein $R^6$ and $R^7$, which may be the same or different, are hydrocarbyl groups each having 1 to 20 carbon atoms or a hydrogen atom, $R^8$ is a hydrocarbyl group having 1 to 20 carbon atoms, X is a halogen, and n and m are numbers in the ranges of $0 \leqq n < 3$ and $0 < m < 3$, respectively. Specifically, (a) trialkylaluminums such as trimethylaluminum, triethylaluminum, triisobutylaluminum, trihexylaluminum, trioctylaluminum and tridecylaluminum, (b) alkylaluminum halides such as diethylaluminum monochloride, diisobutylaluminum monochloride, ethylaluminum sesquichloride and ethylaluminum dichloride, (c) alkylaluminum hydrides such as diethylaluminum hydride and diisobutylaluminum hydride, (d) aluminum alkoxides such as diethylaluminum ethoxide and diethylaluminum phenoxide, can be mentioned.

In addition to these organoaluminum compounds of (a) to (d), other organometal compounds, for instance, alkylaluminum alkoxides represented by the formula $R^9_{3-a}Al(OR^{10})_a$, in which $\underline{a}$ is a number in the range of $1 \leqq a \leqq 3$, and $R^9$ and $R^{10}$, which may be the same or different, are hydrocarbyl groups each having 1 to 20 carbon atoms, can be used in combination. For example, the combination use of triethylaluminum and diethylaluminum ethoxide, the combination use of diethylaluminum monochloride and diethylaluminum ethoxide, the combination use of ethylaluminum dichloride and ethylaluminum diethoxide, and the combination use of triethylaluminum, diethylaluminum ethoxide and diethylaluminum chloride can be mentioned.

Among these, trialkylaluminums are preferable, examples including triethylaluminum, triisobutylaluminum and trihexylaluminum.

The amount of the organoaluminum compound, component (B), is such that the weight ratio of the component (B) to the Ti-containing solid catalyst, component (A), is from 0.1 to 1000, preferably from 1 to 100.

[Polymerization Process]

The polymerization process according to the present invention, in which polymerization is conducted under the action of the above-described catalytic components, comprises at least two steps, a first polymerization step and a second polymerization step.

The first polymerization preferably comes first and the second polymerization step follows, although the reverse sequence may be possible.

The process for producing propylene block copolymers is characterized by, among others, conducting a first polymerization step so that a propylene polymer produced therein will have a pore size determined by a porosimeter of a diameter of 100 to 2,000 Ångstrom, preferably 500 to 1,500 Ångstrom of a pore volume of at least 0.05 cc/g, preferably at least 0.1 cc/g, the upper limit being approx. 1.0 cc/g. The object of the present invention will not be attained when the pore size and the pore volume are outside the ranges specified.

The polymerization of the first and the second steps is conducted in the presence or absence of a solvent or dispersant.

The polymerization in two steps in accordance with the present invention is conducted, as is in the

conventional polymerization in two steps, so that in the presence of at least a portion of the preceding step is conducted the succeeding step.

<Preparation of Catalyst>

The catalyst for use in the present invention can be prepared by contacting with one another the above-described catalytic components (A) and (B) at a time or by stages in or out of the polymerization system. The catalyst components can be supplemented at either of the steps, and, particularly, the succeeding step may preferably be conducted in the presence of an additional amount of an organoaluminum compound.

Optional components such as an alcohol, a boron compound and a boron compound can be used for making up the catalyst.

<Preceding or first Polymerization Step>

The preceding polymerization step is a process in which propylene, or a mixture of propylene and ethylene, is supplied to the polymerization system containing the above-described catalytic components (A) and (B), and, if necessary, the optional component, and polymerized in a single stage or multiple stages, whereby a homopolymer of propylene, or a propylene-ethylene copolymer containing 7 wt.% or less, preferably 4 wt.% or less, and more preferably 0.5 wt.% or less of ethylene is produced in an amount of 10 to 90 wt.%, preferably 30 to 80 wt.%, more preferably 40 to 75 wt.%, of the total amount of polymers obtained in the two steps.

In the case where the ethylene content in the copolymer of propylene and ethylene obtained at the preceding polymerization step is in excess of 7 wt.%, the finally obtainable copolymer has a decreased bulk density, and a low crystalline polymer is produced as a by-product in a largely increased amount. Further, when the polymerization ratio is less than the lower limit oF the above-described range, the amount of a low crystalline polymer produced as the by-product is again increased.

The polymerization temperature at the preceding polymerization step is approximately 30 to 130°C, preferably 50 to 100°C. The polymerization pressure is, in general, in the range of from 1 to 50 $kg/cm^2G$. At the preceding polymerization step, it is preferable to control the MFR by using a molecular weight regulator such as hydrogen to enhance the fluidity of the final copolymer at the time of fusion.

The amount of polymer produced in the preceding polymerization step can alternatively be defined in terms of an amount per gram of the Ti-containing solid catalyst component. More particularly, the amount of polymer produced in the preceding polymerization step may preferably be at least 3,000 g and up to 100,000 g including the amount of polymer produced in the preliminary polymerization, namely a polymer of a diene monomer of 4 or more carbon atoms, per 1 g of the titanium-containing solid catalyst component.

<Succeeding or second Polymerization Step>

The succeeding polymerization step is a process in which the polymerization is successively conducted after the preceding polymerization, that is, by utilizing at least part of the polymerization activity at the preceding polymerization step, and by further feeding a mixture of propylene and ethylene, a rubbery or elastomeric copolymer of propylene and ethylene is produced, in a single stage or multiple stages, with the polymerization ratio in weight ratio of propylene to ethylene of 90/10 to 10/90, preferably 80/20 to 20/80, more preferably 70/30 to 30/70. At this step, it is preferable to produce the polymer in the succeeding step in an amount of 90 to 10 wt.%, preferably 70 to 20 wt.%, more preferably 60 to 25 wt.%, of the total polymerization amount.

At the succeeding polymerization step, other comonomers can additionally be used. For instance, an α-olefin such as 1-butene, 1-pentene and 1-hexene or 4-methyl-pentene can be employed.

The polymerization temperature at the succeeding polymerization step is approximately 30 to 90°C, preferably 50 to 80°C. The polymerization pressure is, in general, in the range of 1 to 50 $kg/cm^2G$.

When shifting from the preceding polymerization step to the succeeding polymerization step, it is preferable to purge propylene gas or propylene/ethylene mixed gas and hydrogen gas remaining.

At the succeeding polymerization step, a molecular weight regulator may be used or may not be used depending upon the purpose.

<Polymerization Mode>

The process for preparing the copolymer according to the present invention can be put into practice by any one of a batch method, a continuous method and a semi-batch method. To prepare the copolymer by the above method, any one of the following modes is employable: a mode in which polymerization is conducted in an inert hydrocarbon solvent such as heptane, a mode in which polymerization is conducted by utilizing monomers employed as the medium, a mode in which polymerization is conducted in gaseous monomers without employing a medium such as those wherein the polymer particles formed are fluidized by a monomer gas flow into a fluidized bed or the polymer particles formed are agitated in the reaction vessel and a mode in which polymerization is conducted in combination with the above modes.

<Propylene block copolymers produced>

The propylene block copolymers produced by the polymerization process according to the present invention are such that the content of the rubbery copolymer of propylene is 10 to 70 wt.%, preferably 35 to 60 wt.%. The term "rubbery copolymer of propylene" used herein means a fraction of the propylene block copolymer produced which is soluble in xylene at 20°C.

The present invention is concerned with a process for producing propylene block copolymers. The term "block copolymer" used herein is in an art-recognized way, and thus includes not only block copolymers in an ideal state, namely such a block copolymer that a block formed in the first step and the block formed in the second step are present on the same molecule chain, but also those which are mixtures of the polymers formed at the first and the second steps and those which lie between the ideal block copolymer and a mixture of the polymers formed in the first and the second polymerization steps.

In view of the nature of two-step polymerization wherein a crystalline polymer is prepared in the first step and a rubbery polymer is prepared in the second step whereby a blend of the two types of polymers is conducted in situ, the two-step polymerization can alternatively be called "chemical blending process".

[Examples of Experiments]

Example 1

[Preparation of Ti-containing solid catalyst component]

To a flask thoroughly purged with nitrogen were introduced 200 ml of dehydrated and deoxygenated n-heptane, and then 0.4 mol of $MgCl_2$ and 0.8 mol of $Ti(O\text{-}nC_4H_9)_4$, followed by a reaction at 95°C for two hours. After the reaction was completed, the reaction mixture was cooled to a temperature of 40°C, and then 48 ml of methylhydrogenpolysiloxane having a viscosity of 20 centistokes was added thereto, followed by a reaction for three hours. The solid component thus obtained was washed with n-heptane.

Subsequently, 50 ml of n-heptane which had been purified in the same way as the above was introduced into a flask thoroughly purged with nitrogen, and then 0.2d mol, calculated in terms of the Mg element, of the above-synthesized solid component was introduced thereto. Thereafter, a mixture of 25 ml of n-heptane and 0.8 mol of $SiCl_4$ was introduced into the flask at 30°C over 30 minutes, followed by a reaction at 90°C for one hour. After the reaction was completed, the reaction product was washed with n-heptane.

50 ml of n-heptane thoroughly purified was introduced to a flask thoroughly purged with nitrogen, and then 5 g of the solid component obtained, 15 g of divinylbenzene, 2.6 ml of $(CH_3)_3CSi(CH_3)(OCH_3)_2$, 1. 2 ml of vinyltrimethylsilane, and 4.5 g of triethylaluminum were introduced thereto, and were contacted with one another at 30°C for two hours. After completion of the contact, the product was washed with n-heptane to give the Ti-containing solid catalyst component, component (A). The titanium-containing solid catalyst content was found to contain 2.64 g of polymerized divinylbenzene per g.

[Copolymerization of propylene]

According to the process disclosed in Japanese Patent Publication No. 33721/1986, copolymerization of propylene was carried out wherein a horizontal biaxial gas phase polymerization vessel of 13-liter volume was used.

After replacement of the inside of the polymerization vessel with nitrogen, 400 g of an amply dehydrated and deoxygenated polymer carrier was added. Subsequently, 500 mg of triethylaluminum as the component (B) and 120 mg of the above synthesized component (A) were introduced. In the polymerization step (1) of the first stage, after introduction of 1000 ml of hydrogen, at a temperature controlled to 75°C, propylene was introduced at a constant rate of 1.3 g/min. The stirring rotation of the polymerization vessel was 350 r.p.m. The polymerization temperature was maintained at 75°C and, after 1 hour and 58 minutes, introduction of propylene was stopped. Polymerization was continued at 75°C, and when the polymerization pressure became 1 $Kg/cm^2G$, a small amount of the polymer sample was collected.

The polymer powder sampled was found, upon determination by a porosimeter, to have a pore volume of the pore size of 100 to 2,000 Ångstrom of 0.12 cc/g. The amount of propylene polymerized in this first step was 4,720 g propylene/g·Ti-containing solid catalyst component.

Then, 500 ml of $H_2$ was added to initiate the polymerization step (2). The second stage polymerization was carried out by introducing 0.59 g/min. of propylene and 0.40 g/min. of ethylene, respectively, at constant rates at 70°C for three hours and 49 minutes. Introduction of propylene and ethylene was stopped, and polymerization under the residual pressure was carried out until the polymerization pressure became 1 $Kg/cm^2G$. After completion of polymerization, the polymer was taken out after purging the process product to give 381 g of a polymer. The polymer formed had an MFR of 6,8 g/10 min., a polymer bulk density (B.D.) of 0.49 g/cc, and a polymer falling speed of 4.1 sec. The weight of the rubbery copolymer was 59.2% by weight.

There was no polymer adherence in the polymerization vessel at all, and the intermediate sample had

an MFR of 17.6 g/10 min.

The "polymer falling speed" means the time required for falling of 50 g of the polymer out of an opening of a diameter of 12 mm of an inverted conical vessel made of a stainless steel sheet with an angle of opening of 70°.

Comparative Example 1

Procedure set forth in Example 1 was followed except for the use of the Ti-containing solid catalyst which had not undergone the preliminary polymerization of divinylbenzene.

A polymer in an amount of 377 g was obtained, which had MFR of 7.9 g/10 min., polymer B.D. of 0.21 g/cc, polymer falling speed which was unable to determine, and an amount of the rubbery copolymer of 58.9% by weight. The polymer obtained at the end of the first step was found to have a pore volume of 0.006 cc/g.

Example 2

[Preparation of Ti-containing solid catalyst component]

To a flask thoroughly purged with nitrogen were introduced 200 ml of dehydrated and deoxygenated n-heptane, and then 0.1 mol of $MgCl_2$ and 0.2 mol of $Ti(O\text{-}nC_4H_9)_4$, followed by a reaction at 95°C for two hours. After the reaction was completed, the reaction mixture was cooled to a temperature of 40°C, and then 12 ml of methylhydrogenpolysiloxane having a viscosity of 20 centistokes was added thereto, followed by a reaction for three hours. The solid component thus obtained was washed with n-heptane.

Subsequently, 50 ml of n-heptane which had been purified in the same way as the above was introduced into a flask thoroughly purged with nitrogen, and then 0.03 mol, calculated in terms of the Mg element, of the above-synthesized solid component was introduced thereto. Thereafter, a mixture of 25 ml of n-heptane and 0.05 mol of $SiCl_4$ was introduced into the flask at 30°C over 30 minutes, followed by a reaction at 90°C for three hours. After the reaction was completed, the reaction product was washed with n-heptane.

A mixture of 25 ml of n-heptane with 0.003 mole of phthalic chloride was then fed to the flask at 90°C over 30 minutes, followed by a reaction at 95°C for 1 hour. After the reaction, the solid product was washed with n-heptane. 0.3 g of $WCl_6$ and 5.0 ml of $SiCl_4$ were fed, followed by a reaction at 90°C for 2 hours. After the reaction, the solid product was amply washed with n-heptane, which was found to contain 0.68% by weight of titanium.

Into a flask amply purged with nitrogen was introduced 80 ml of amply purified n-heptane, and then 4 g of the solid component obtained above 20 g of 1,5-hexadiene, 0.4 ml of $(CH_3)_3CSi(CH_3)(OCH_3)_2$, 1.0 ml of vinyltrimethylsilane, and further 1.2 g of triethylaluminum were respectively introduced and contacted at 20°C for 1 hour. After completion of the contact, the product was amply washed with n-heptane to provide the Ti-containing solid catalyst component. The amount of 1,5-hexadiene polymerized at the preliminary polymerization was 3.88 g/g·Ti-containing solid catalyst component.

[Copolymerization of Propylene]

Polymerization was conducted under the same conditions as in Example 1.

A polymer in an amount of 384 g was obtained, which had MFR of 7.1 g/10 min., a polymer B.D. of 0.50 g/cc, a polymer falling speed of 3.9 sec, and an amount of the rubbery copolymer was 59.0% by weight.

The powder polymer at the end of the first polymerization step had a pore volume of 0.19 cc/g. The amount of a polymer produced in the first step was 6300 g propylene/g·Ti-containing solid catalyst component.

Comparative Example 2

The procedure of Example 1 was followed except for the amount of the polymer produced in the first step which was changed to 2000 g propylene/g·Ti-containing solid catalyst component.

A polymer in an amount of 379 g was obtained, which had MFR of 8.3 g/10 min., a polymer B.D. of 0.29 g/cc, a polymer falling speed which was unable to determine, and an amount of the rubbery copolymer of 58.3% by weight. The polymer at the end of the first step had a pore volume of 0.021 cc/g.

**Claims**

1. In a process for producing propylene block copolymers comprising steps, under catalysis by a Ziegler catalyst comprising a titanium-containing solid catalyst component and an organoaluminum component, of a first polymerization step wherein propylene alone or an admixture of propylene with ethylene is polymerized in a single step or a multiple steps to prepare a crystalline propylene polymer and a second step wherein an admixture of propylene with ethylene is polymerized in a single step or a multiple steps to prepare a rubbery polymer, the improvement which comprises the use in the first step of a titanium-containing solid catalyst component which has undergone preliminary polymerization so that 1 to 100 g, per 1 g of the titanium-containing solid

catalyst component, of a diene compound having 4 to approximately 18 carbon atoms is polymerized thereon thereby preparing, in the first step, a crystalline propylene polymer which has a pore volume of at least 0.05 c.c of pores of a diameter of 100 to 2,000 Ångstrom determined by a porosimeter.

**2.** The process according to claim 1, wherein the diene compound having 4 to 18 carbon atoms is a divinylbenzene.

**3.** The process according to claim 1, wherein the diene compound having 4 to 18 carbon atoms is an alkadiene of non-conjugated structure of 4 to 8 carbon atoms.

**4.** The process according to claim 3, wherein the alkadiene is a hexadiene.

**5.** The process according to claim 1, wherein the amount of the diene compound polymerized in the preliminary polymerization is from 2 to 10 g per 1 g of the titanium-containing solid catalyst component.

**6.** The process according to claim 1, wherein the titanium-containing solid catalyst component which is to undergo the preliminary polymerization is prepared by one of:

(a) a method in which halogenated magnesium and an electron donor are brought into contact with a titanium-containing compound;
(b) a method in which halogenated magnesium, an electron donor and halogen-containing titanium compound are brought into contact with alumina or magnesia which has been treated with a halogenated phosphorus compound;
(c) a method in which a halogenated titanium compound and/or a halogenated compound of silicon and, as an optional component, an electron donor are brought into contact with a solid component which is obtained by contacting halogenated magnesium with a titanium tetraalkoxide and a polymeric silicon compound having the following formula:

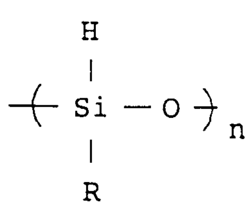

wherein R is a hydrocarbyl group having approximately 1 to 10 carbon atoms, and n represents such a polymerization degree that the polymeric silicon compound has a viscosity of approximately 1 to 100 centistokes;
(d) a method in which a titanium compound is brought into contact with a solid component which is separated, by using a halogenating agent or titanium halogen compound, from a solution prepared by dissolving a magnesium compound in a titanium tetraalkoxide and an electron donor;
(e) a method in which an organomagnesium compound is reacted with a halogenating agent and/or a reducing agent and then an electron donor and a titanium compound are brought into contact therewith; and
(f) a method in which a halogenating agent and/or titanium compound is brought into contact with an alkoxymagnesium compound in the presence or absence of an electron donor.

**7.** The process according to Claim 6, wherein said electron donor compound is a silicon compound represented by the following formula:

$$R^1_m X_n Si(OR^2)_{4-m-n}$$

wherein $R^1$ and $R^2$ are hydrocarbyl groups each having 1 to 10 carbon atoms, X is a halogen, and m and n are numbers which are in the ranges of $0 \leqq m \leqq 3$, $0 \leqq n \leqq 3$, and $0 \leqq m+n \leqq 3$ used in an amount such that the atomic ratio of Si/Ti is 0.01 to 1,000.

**8.** The process according to claim 7, wherein the silicon compound is used at the step of the preliminary polymerization.

**9.** The process according to claim 1, wherein the titanium-containing solid catalyst component comprises a magnesium compound.

**10.** The process according to claim 1, wherein the titanium-containing solid catalyst component has a titanium compound furnished by $Ti(o\text{-}nC_4H_9)_4$.